# EUROPEAN PATENT SPECIFICATION

(11) **EP 2 997 808 B1**
(45) Date of publication and mention of the grant of the patent: **26.04.2017**
(21) Application number: 15177371.0
(22) Date of filing: 17.07.2015
(51) Int. Cl.: A01D 34/00, G05D 1/02

(54) **A SYSTEM FOR AN OPTIMISED CUTTING OF GRASS**
SYSTEM FÜR EIN VERBESSERTES SCHNEIDEN VON GRASS
SYSTÈME POUR UNE COUPE AMÉLIORÉE D'HERBE

(30) Priority: 19.09.2014 IT MI20141622
(43) Date of publication of application: 23.03.2016
(73) Proprietor: Bernini, Fabrizio, 52021 Bucine - Arezzo (IT)
(72) Inventor: Bernini, Fabrizio, 52021 Bucine - Arezzo (IT)
(74) Representative: Tansini, Elio Fabrizio

(56) References cited:
- EP-A1- 2 679 083
- EP-A2- 2 413 215
- EP-A2- 2 447 799
- WO-A1-03/104909
- WO-A1-2014/129943

## Description

### FIELD OF APPLICATION

The present invention relates to a system for an optimized cutting of grass. In particular, the present invention relates to a system for an optimized cutting of grass comprising an automatic lawn mower.

### PRIOR ART

As is well known, automatic lawn mowers are presently designed to operate within pre-established cutting areas.

Lawn mowers are used to maintain lawns, gardens and grassy areas in general in optimal conditions, i.e. to keep the grass below a certain height in a substantially homogeneous manner throughout the whole cutting area.

The cutting area is delimited by a perimeter wire or cable in which an electric signal is propagated; by picking up this electric signal, the lawn mower is capable of recognizing the limits of the cutting area and of regulating, accordingly, its movement and/or cutting activities. In particular, various adjacent cutting areas can be provided for.

As is well known, lawn mowers are provided with an autonomous power supply unit, which has the task of supplying electricity to the electrical and electromechanical devices present inside the lawn mower itself, such as, for example, the motors intended to move the wheels and blades and the electronic circuits dedicated to sensing the presence of grass, sensing the presence of the perimeter cable, processing the sensed data and controlling the various motors, etc.

When the power supply unit, typically consisting of a battery or battery pack, is close to being drained, the lawn mower goes to a recharging base, where the power supply unit can be recharged so as to enable, after a certain amount of time, the continuation of the activity of the lawn mower.

European patent no. 2 502 482, granted under the name of the same Applicant, describes a particular technique for returning to the recharging base, according to which the lawn mower follows a trajectory composed of a succession of arcs having their extremities approximately positioned along the perimeter cable.

This solution undoubtedly has a series of advantages, including that of minimizing the probability of the lawn mower passing several times over the same area and damaging the grass to be found there.

However, continuing in his research activity, the Applicant has found that arced trajectories also imply some drawbacks:
- the route that the lawn mower travels to return to the base is decidedly longer than a theoretical rectilinear trajectory, and thus results in a waste in terms of time, as well as in terms of the energy consumed by the lawn mower;
- in order to be able to delineate arced trajectories, the wheels of the lawn mower are actuated in a substantially alternating manner (the left wheel is actuated to turn right, while the right wheel remains stationary, and vice versa), so that the lawn mower can never operate at its maximum speed, which is clearly reached along rectilinear trajectories; this means a further extension of the times needed to return to the recharging base;
- the fact of following arced trajectories results in a significant burden on the mechanical and electrical/electronic structure of the lawn mower and, in the long term, more frequent and costly maintenance activity may be required.

Other techniques are known in which the autonomous power supply unit enables the lawn mower to move along the cutting area, reversing the direction of movement if it comes near an obstacle, and/or travel along a pre-established cutting path or return path to the base.

During normal cutting operations, the lawn mower encounters obstacles of varying nature, such as stones, uneven ground, or delimiting walls; each time the lawn mower encounters an obstacle, it is forced to change direction; the recharging base can itself constitute an obstacle to the passage of the lawn mower, determining an abrupt obligatory change of direction, as well as potential damage due to the impact between the lawn mower and the base or the aforesaid obstacles of varying nature, which results from the detection of the obstacle at a distance from the obstacle itself that is practically nil.

The lawn mower in operation is provided with blades designed for cutting grass; moreover, the lawn mower is normally equipped with a recharging means and an obstacle sensing means in the front part.

It may be deduced that every potential interference with cutting on the part of a foreign object can prove damaging both for the regular forward movement of the lawn mower and for the cutting means, as well as causing possible damage to the recharging means and the obstacle sensing means positioned on the front of the lawn mower.

Furthermore, the presence of danger zones not delimited by delimiting walls inside the cutting area, such as holes or areas with surface roots or the like, can cause the lawn mower to tip over and be completely disabled, since with the known systems such obstacles are not detected except in proximity to the obstacle itself.

In short, it may happen that the lawn mower fails to arrive at the recharging base because it is blocked by the presence of obstacles that are difficult to get around, or as it has to get around such obstacles the remaining charge may be insufficient for its return.

It may also happen that the return, though successful, takes a longer time than expected, thus increasing the risk of the lawn mower possibly running out of power.

Document EP 2 447 799 A2 discloses a system for cutting grass according to the preamble of claim 1.

In light of the foregoing, the object of the present invention is to provide an apparatus for cutting grass in which the time it takes to move from one predefined point to another predefined point of a cutting area is optimized. Another object of the present invention is to provide a system for cutting grass in which the time it takes the lawn mower to return to the base is optimized.

Another object of the invention is to provide a system for cutting grass that reduces the complexity of carrying out the operation of moving from one point to another of a cutting area, while protecting the lawn mower against wear, faults and malfunctions.

Another object of the invention is to provide a system for cutting grass that reduces the complexity of performing the operation of returning to the base, while protecting the lawn mower against wear, faults and malfunctions.

A further object of the invention is to provide a system for cutting grass in which energy consumption is also optimized.

### SUMMARY OF THE INVENTION

These and other objects are achieved by a system and a method for cutting grass according to what is disclosed in the appended claims 1 to 17.

The invention, as described, achieves the following technical effects:
- optimized travel path, hence a greater assurance of returning to the base or, in general, of reaching a predefined point;
- lower energy consumption, thanks to the optimized path;
- reduction in the energy required to transfer path information to the lawn mower;
- better resistance to damage of its technical components, since the most dangerous obstacles are avoided without coming excessively near;
- better safeguarding of the recharging means/sensor means by virtue of the reduced contacts with dangerous obstacles;
- more reliable recharging means thanks to the reduced contacts with obstacles;
- a cutting means that is as immune to damage as possible;
- a more reliable cutting means;

The technical effects mentioned and other technical effects of the invention will appear in greater detail from the description, set forth hereunder, of an example embodiment given by way of non-limiting illustration with reference to the appended drawing.

### BRIEF DESCRIPTION OF THE FIGURES

The description is provided below with reference to the accompanying figures, whose purpose is likewise purely illustrative and hence non-limiting, in which:
- figure 1A shows a general diagram of the system of the invention;
- figure 1B shows a diagram of a possible embodiment of the system of the invention with a target point in a first position;
- figure 1C shows a diagram of a possible embodiment of the system of the invention with a target point in a second position;
- figure 2 is a schematic view of the lawn mower included in the system of the preceding figures;
- figure 3 shows a block diagram of a detail of the lawn mower of figure 2;
- figures 4A and 4B show a component of the system of the invention;
- figures 5A and 5B show a circuit diagram of a particular of the system of the invention.

### DETAILED DESCRIPTION

A system 100 for cutting grass according to the invention comprises a lawn mower 1, a perimeter cable 2 delimiting a cutting area A, in which a perimeter electrical signal ES is propagated and at least one means MSi (i=1..n) for signalling a path change ΔPi (i=1 ...n) associated with the perimeter cable 2, wherein the at least one means MSi for signalling a path change ΔPi is configured to signal to the lawn mower a path change ΔPi 1 relative to a predefined path PPRED provided for by the predefined operation of the lawn mower 1, wherein the path change ΔPi is signalled to the lawn mower 1 by means of an encoded signal Si (i=1 ...n) generated by the at least one signalling means MSi (i=1...n), and wherein the lawn mower 1 comprises a sensor means 40 configured to sense the encoded signal Si and a processing unit 60 configured to actuate the lawn mower 1 as a function of the sensed encoded signal Si in order to cause the lawn mower 1 to make the corresponding path change ΔPi.

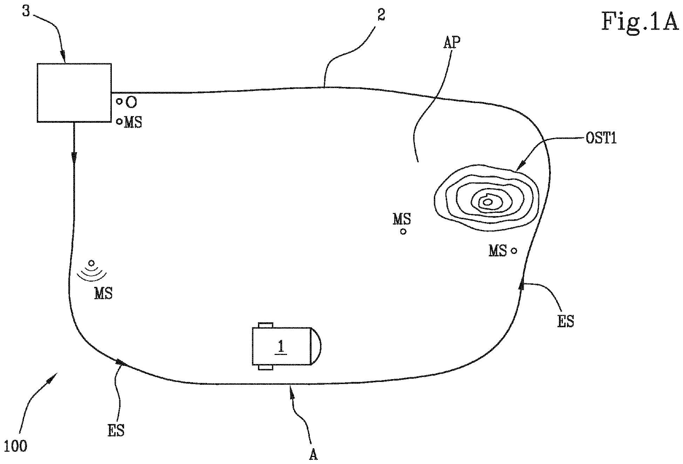

With reference to figure 1A, the system 100 according to the invention comprises a lawn mower 1 and a cutting area A delimiting the area in which the lawn mower performs the cutting.

The movement of the lawn mower 1 takes place in proximity to the cutting area A, without excluding the possibility of it being outside the latter under particular conditions.

The system further comprises a perimeter cable 2, delimiting the cutting area A, in which a perimeter electrical signal ES is propagated.

The cutting area A comprises at least one main area AP.

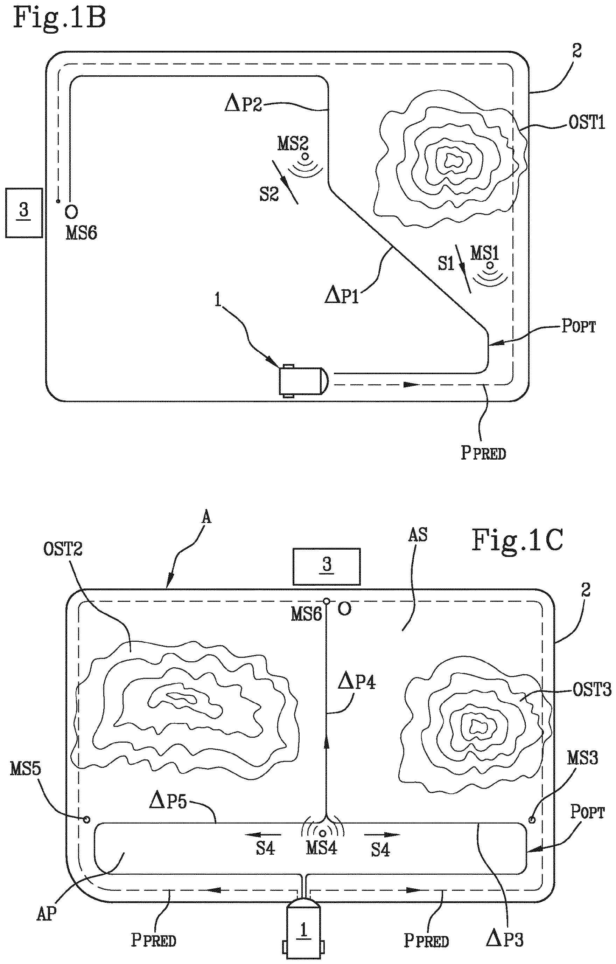

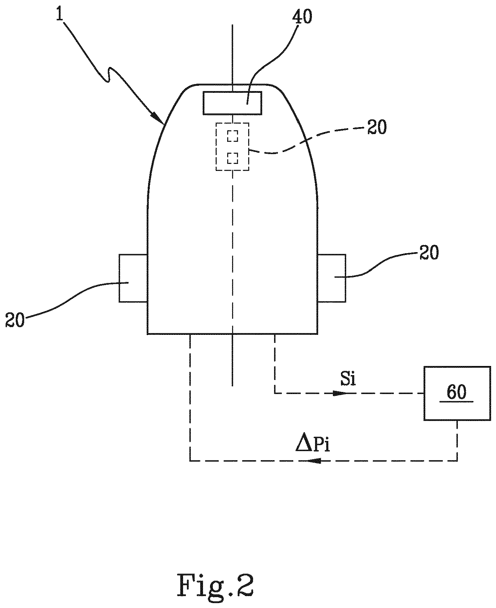

In addition, with particular reference to figure 1C, the cutting area A comprises at least one secondary area ASi (1=1 ..m), possibly contiguous with the main area AP and delimited at least by the perimeter cable 2. With particular reference to figure 2, the lawn mower 1 comprises movement means 20 for moving the lawn mower 1 in the cutting area A and one or more blades for cutting the grass in the cutting area A.

With reference to figs. 1A, 1B and 1C, advantageously, according to the invention, the system comprises at least one means MSi for signalling (i=1 ...n) a path change ΔPi (i=1 ...n) associated with the perimeter cable 2. The technical effect achieved is an immediate, sure signalling of a possible danger/obstacle in order to safeguard the integrity of the lawn mower and ensure the reliability of the cutting operation.

Hereinafter it will be taken for granted that the signalling means MSi can be in a number of one or a plurality.

The means MSi for signalling a path change ΔPi is configured to signal to the lawn mower a path change ΔPi 1 relative to a predefined path PPRED provided for by the predefined operation of the lawn mower 1.

The predefined path PPRED can be the trajectory defined in the granted European patent no. 2 502 482 under the name of the same applicant, i.e. an arced path, or the one described in European patent application no. 12154174.2 under the name of the same applicant, i.e. movement along lines parallel to the perimeter cable 2, or others.

The signalling means MSi defines for the lawn mower 1, via the path change ΔPi, at least one portion of an optimal path POPT for reaching a target point O relative to said predefined path PPRED.

The optimal path for reaching the target point O thus comprises predefined path sections PPRED and path change sections ΔPi.

According to the invention, the means MSi for signalling a path change ΔPi is configured to be movable within said cutting area A, in order to define a new optimal path POPT as a function of a modification of the target point O.

In a preferred embodiment of the invention, the target point O comprises a recharging base 3 for the lawn mower 1 positioned in the cutting area A.

In other words, the recharging base 3 can be outside or inside the cutting area A or positioned on the perimeter cable 2.

The technical effect obtained with the capability of the signalling means MSi to be moved is an extreme flexibility in configuring the signals in the cutting area, which enables new obstacles to be identified with extreme ease so as to ensure that the operation of the lawn mower during cutting is in no way obstructed.

Examples of obstacles can be an abrupt slope, a hole, the beginning of a bottleneck, surface roots, etc; the obstacles OST 1 and OST2 are schematically shown in figures 1b and 1C.

According to the invention, the signalling means MSi is powered by an electromotive force fem induced by a magnetic field B generated on the basis of the perimeter electrical signal ES.

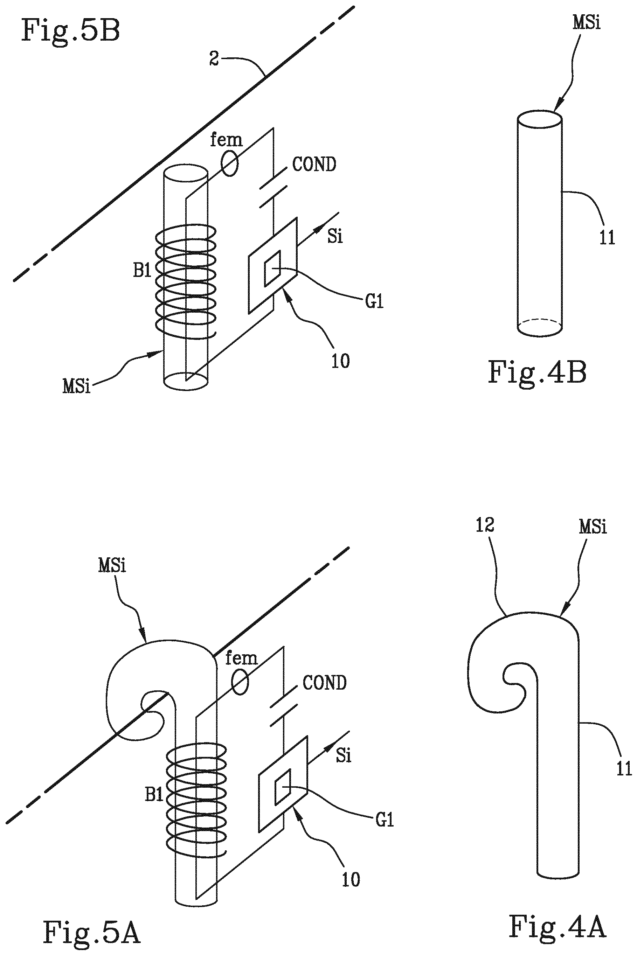

In other words, a current varying over time, which flows in the perimeter cable 2, determines a corresponding magnetic field B, which determines an induced electromotive force fem in the signalling means MSi, as shown in figures 5A and 5B.

The pattern of the signal in the perimeter cable is, for example, as shown in the granted European patent no. 2 545 758 of the same applicant, in particular sinusoidal.

In a preferred embodiment of the invention, the signalling means MSi is made of ferromagnetic material.

In particular, the signalling means comprises a winding around a ferrite core.

The signalling means MSi comprises a capacitor COND configured to be charged through the induced electromotive force fem.

The signalling means MSi further comprises an electronic circuit 10, which will be described more in detail below.

In one embodiment of the invention, the means MSi for signalling a path change ΔPi comprises a stem 11 and said signalling means is detached from the perimeter cable 2.

In other words, the signalling means MSi is positioned in the cutting area, but not in contact with the perimeter cable 2.

In an alternative embodiment, the signalling means MSi is positioned in contact with the perimeter cable 2.

In this embodiment, the signalling means MSi comprises the stem 11 and a hook-shaped head 12, preferably at one end of the stem 11, configured to surround the perimeter cable 2 in such a way as to define a physical contact between the signalling means MSi and the perimeter cable 2. Preferably, the signalling means MSi comprises a meter for measuring the intensity B1 of the magnetic field B which powers it.

The means MSi for signalling a path change ΔPi comprises an electronic circuit 10 configured to emit the encoded signal Si (i=1 ...n).

The electronic circuit 10 is powered by an energy U stored by the capacitor COND as a result of the electromotive force induced by the magnetic field B.

The electronic circuit 10 is configured to generate the encoded signals Si. In particular, the electronic circuit 10 comprises a generator G1 of the encoded signal Si.

In other words, according to the invention, the path change ΔPi is signalled to the lawn mower 1 by means of an encoded signal Si (i=1 ...n) generated by the signalling means MSi.

Advantageously, according to the invention, the path change ΔPi is signalled to the lawn mower by means of the encoded signal Si (i=1 ...n) generated by the signalling means MSi.

The technical effect obtained is the transmission, to the lawn mower, of information for travelling an optimized path which is minimized in terms of the energy required to transfer such information.

Advantageously, according to the invention, the encoded signal Si comprises an operational code Ci (i=1 ...n) representative of a specific path change function fΔPi representative of a change in the predefined path of the lawn mower 1.

Preferably, the generator G1 is configured to generate an operational code Ci (i=1 ...n) as a function of the measured intensity B1 of the magnetic field B generated by the perimeter cable 2.

In particular, the generator G1 is configured to generate the operational code Ci as a function of predefined minimum threshold values B11, B12 of the measured intensity B1.

More in particular, the generator G1 is configured to generate an operational code Ci corresponding to a detailed path change function if the value of the magnetic field B>=B12.

On the other hand, the generator G1 is configured to generate an operational code Ci corresponding to a simple path change function if the value of the magnetic field B11 <B<B12.

These threshold values are tied to distances from the perimeter cable serving to ensure reception of the field B; as an initial approximation, a maximum allowed distance of around 10 metres corresponds to the minimum value B11, whereas a maximum allowed distance of around 2.5 metres corresponds to the minimum value B12>B11.

The signalling means MSi generates the operational code Ci; 1 ...n taking into account that some codes, corresponding to detailed path change functions (e.g. fΔP3 and fΔP4 listed below), will be generable only if the field B is B>=B12.

In particular, in one embodiment, the signal Si emitted by the signalling means MSi will be "simpler" because the field B generated by the perimeter cable and sensed by the signalling means MSi is smaller (B11<B<B12); the signal will be, for example, simply "turn right by 90°", "turn left by 90°" etc..

In particular, in one embodiment, the signal Si emitted by the signalling means MSi will be "more complex " because the field B generated by the perimeter cable and sensed by the signalling means MSi is larger (B>=B12); the signal will be, for example, "slow down for 2 metres, then turn left by 90°, then accelerate to the operating speed", or "raise blades, accelerate for 2 metres, slow down, lower blades", etc..

The technical effect obtained is an assurance of integrity of the signal Si transmitted to the lawn mower, since it is generated with sufficient energy to ensure the reception thereof by the lawn mower.

The path change functions fΔPi comprise one or more among:
- performing a dedicated entry manoeuvre, if a recharging base (fΔP0) is present;
- turning left or right by a pre-established angle, for example 90°, in order to reach the fastest return line, if a dangerous obstacle is present (fΔP1);
- starting to cut in a secondary area (ASi; 1= 1 ..m) (fΔP2);
- in sequence, slowing down, turning left or right by a predefined angle (in particular 90°), and accelerating (fΔP3);
- in sequence: raising the blades, slowing down, lowering the blades and accelerating (fΔP4);
- or the like

In other words, when the lawn mower 1 meets a signalling means MSi, the latter transmits to it the signal Si comprising the code Ci for instructing the lawn mower as to the path change necessary to avoid a possible obstacle/danger located on the predefined path.

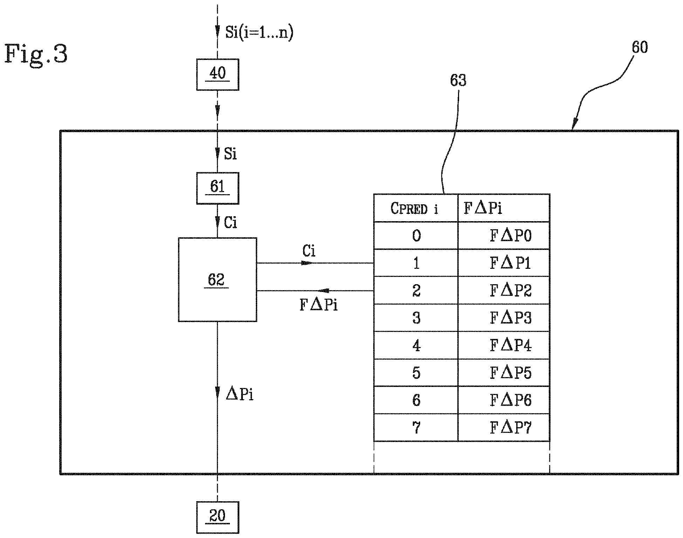

With particular reference to figure 3, the lawn mower is described in the part thereof for processing the received code Ci.

The lawn mower 1 comprises, in addition to the previously described cutting and movement means, a sensor means 40 configured to sense the encoded signal Si.

Preferably, the sensor means 40 is situated in the front part of the lawn mower, i.e. in the same part where the recharging means exploited by the lawn mower upon its return to the recharging base is preferably also located.

The lawn mower 1 further comprises a processing unit 60 associated with the sensor means 40.

The processing unit 60 is configured to actuate the movement means 20 as a function of the sensed encoded signal Si, so that the movement means 20 are moved in order to cause the lawn mower 1 to make a path change ΔPi.

In general it should be noted that in the present context and in the subsequent claims, the processing unit 60 will be presented as divided into distinct functional modules (memory modules or operating modules) for the sole purpose of describing the functions of the unit itself in a clear and complete manner.

In reality, the processing unit can consist in a single electronic device (or circuit board), duly programmed to perform the functions described, and the various modules can correspond to hardware and/or routine software entities belonging to the programmed device

Alternatively, or in addition, such functions may be performed by a plurality of electronic devices over which the aforesaid functional modules can be distributed

The processing unit can moreover rely on one or more processors to execute the instructions contained in the memory modules.

The processing unit 60 further comprises a memory module 63 comprising a correspondence between a predefined operational code CPREDi (1...n) and the path change function (fΔPi; i= 1...n).

The predefined operational code CPREDi (i=1 ...n) is a predefined code assigned to each specific path change function.

The processing unit 60 comprises a comparison module 62 configured to compare the operational code Ci (i=1..n) with the predefined operational code CPREDi (i = 1 ...n) to identify the corresponding path change function fΔPi (i= 1 ...n) so that the movement means 20 are moved in order to cause the lawn mower 1 to make the path change ΔPi.

The system of the invention guarantees the technical effects of:
- optimizing the travel path, hence a greater assurance of return to the base or, in general, of reaching a predefined point;
- lower energy consumption, thanks to the optimized path;
- reduction in the energy required to transfer path information to the lawn mower;
- better resistance to damage of the lawn mower components, since the most dangerous obstacles are avoided without coming excessively near;
- better safeguarding of the recharging means/sensor means by virtue of the reduced contacts with dangerous obstacles;
- a longer life of the recharging means and cutting means thanks to the reduced contacts with obstacles and consequent greater assurance of cutting quality.

With regard to the secondary areas AS (see figure 1C), the functioning assured by the present invention is advantageous since the lawn mower autonomously knows how many there are and how far they are from the base because it meets the signalling means, positioned accordingly. This enables the lawn mower to avoid returning to the base in order to have a reference of the secondary area.

The present invention further comprises a cutting optimization method implemented by the cutting optimization system described, wherein the lawn mower performs the steps of:
- moving along the perimeter cable 2 to reach the target point O;
- meeting at least one signalling means MSi;
- receiving an encoded signal Si from the signalling means MSi;
- following a path change ΔPi (i=1..n) relative to a predefined path PPRED on the basis of the received signal Si; i= 1 ..n, wherein the at least one signalling means MSi (i=1 ...n) defines for the lawn mower 1, via the path change ΔPi, at least one portion of an optimal path POPT for reaching a target point O, relative to the predefined path PPRED provided for by the predefined operation of the lawn mower 1, wherein said signalling means (MSi; i=1...n) is configured to be movable within a cutting area (A) in order to define a new optimal path (POPT) as a function of a modification of said target point (O).

## Claims

1. A system (100) for cutting grass comprising:
a lawn mower (1) provided with:
- movement means (20) for moving said lawn mower (1) in a cutting area (A);
- one or more blades (30) for cutting grass in said cutting area (A);
a perimeter cable (2), delimiting said cutting area (A), in which a perimeter electrical signal (ES) is propagated;
at least one means (MSi; i= 1 ...n) for signalling a path change (ΔPi; i= 1...n) associated with said perimeter cable (2),
- wherein said means (MSi; i=1...n) for signalling a path change (ΔPi; i= 1...n) is configured to signal to said lawn mower (1) a path change (ΔPi) relative to a predefined path (PPRED) provided for by the predefined operation of said lawn mower (1);
- wherein said path change (ΔPi) is signalled to said lawn mower by means of an encoded signal (Si; i=1 ...n) generated by said signalling means (MSi; i= 1...n);
- wherein said signalling means (MSi; i= 1 ...n) is powered by an electromotive force (fem) induced by a magnetic field (B) generated on the basis of said perimeter electrical signal (ES);
wherein said lawn mower (1) further comprises:
- a sensor means (40) configured to sense said encoded signal (Si);
- a processing unit (60) associated with said sensor means (40) and configured to actuate said movement means (20) as a function of said sensed encoded signal (Si) so that said movement means (20) are moved in order to cause the lawn mower (1) to make said path change (ΔPi);
wherein said at least one signalling means (MSi; i1 ...n) defines for said lawn mower (1), via said path change (ΔPi), at least one portion of an optimal path (POPT) for reaching a target point (O) relative to said predefined path (PPRED) provided for by the predefined operation of said lawn mower (1);
**characterised in that**
said means (MSi; i=1 ...n) for signalling a path change (ΔPi; i=1 ...n) is configured to be movable within said cutting area (A) in order to define a new optimal path (POPT) as a function of a modification of said target point (O).

2. The system according to claim 1, wherein said means (MSi; i=1...n) for signalling a path change (ΔPi; i=1 ...n) comprises an electronic circuit (10) configured to emit said encoded signal (Si; i=1...n).

3. The system according to any one of the preceding claims, wherein said electrical encoded signal (Si) comprises an operational code (Ci; 1 ...n) representative of a specific path change function (fΔPi; i= 1 ...n) representative of a change in the predefined path of said lawn mower (1).

4. The system according to claim 3, wherein said processing unit (60) comprises a memory module (63) comprising a correspondence between a predefined operational code (CPREDi; i=1 ...n) and said path change function (fΔPi; i= 1...n).

5. The system according to claims 3 and 4, wherein said processing unit (60) comprises a comparison module (62) configured to compare said operational code (Ci; 1 ...n) with said predefined operational code (CPREDi; i=1 ...n) to identify a corresponding said path change function (fΔPi; i= 1...n) so that said movement means (20) are moved in order to cause the lawn mower (1) to make said path change (ΔPi).

6. The system according to any one of claims 3 to 5, wherein said path change functions (fΔPi; i= 1...n) comprise one or more among:
performing a dedicated entry manoeuvre, if a recharging base (fΔP0) is present;
turning left or right by a predefined angle in order to reach the fastest return line, if a dangerous obstacle (OST1, OST2) is present (fΔP1);
starting to cut in a secondary area (ASi; 1= 1 ..m) (fΔP2);
in sequence, slowing down, turning left or right by a predefined angle and accelerating (fΔP3);
in sequence: raising the blades, slowing down, lowering the blades and accelerating (fΔP4);
or the like.

7. The system according to any one of the preceding claims, wherein said signalling means (MSi; i= 1...n) comprises a meter for measuring the intensity (B1) of said magnetic field (B) which powers said signalling means.

8. The system according to claim 7, wherein said electronic circuit (10) comprises a generator (G1) of said encoded signal (Si) configured to generate said operational code (Ci; i=1...n) as a function of said measured intensity (B1).

9. The system according to claim 8, wherein said generator (G1) is configured to generate said operational code (Ci; i=1...n) as a function of predefined minimum threshold values (B11, B12) of said measured intensity (B1).

10. The system according to claim 9 wherein said generator (G1) is configured to generate:
an operational code (Ci) corresponding to a detailed path change function (fΔPi; i= 1...n) if the value of said magnetic field (B) is B>=B12;
an operational code (Ci) corresponding to a simple path change function (fΔPi; i= 1...n) if the value of the magnetic field (B) is B11<B<B12.

11. The system according to any one of the preceding claims, wherein said at least one signalling means (MSi; i= 1...n) is made of ferromagnetic material.

12. The system according to claim 11 wherein said at least one signalling means (MSi; i= 1...n) comprises:
a capacitor (COND) configured to be charged through said electromotive force (fem);
said electronic circuit (10), powered by a corresponding energy (U) stored by said capacitor (COND), and configured to generate said encoded signals (Si).

13. The system according to any one of the preceding claims, wherein said at least one means (MSi; i= 1...n) for signalling a path change (ΔPi; i= 1...n) comprises:
a stem (11);
said at least one signalling means being detached from said perimeter cable (2).

14. The system according to any one of claims 1 to 12, wherein said at least one means (MSi; i= 1...n) for signalling a path change (ΔPi; i= 1...n) is in contact with said perimeter cable (2).

15. The system according to claim 14, wherein said at least one means (MSi; i=1...n) for signalling a path change (ΔPi; i=1...n) comprises:
a stem (11);
a hook-shaped head (12), preferably at one end of said stem (11), configured to surround said perimeter cable (2) in such a way as to define a physical contact of said signalling means (MSi; i= 1 ...n) with said perimeter cable (2).

16. The system according to any one of the preceding claims, wherein said cutting area (A) comprises at least one main area (AP) and at least one secondary area (ASi; i=1..m), possibly contiguous, and delimited at least by said perimeter cable (2).

17. A cutting optimization method implemented by the cutting optimization system of the preceding claims, comprising the steps, implemented by said lawn mower (1) in a cutting area (A), of:
• moving along the perimeter cable (2) delimiting said cutting area (A) to reach the target point (O);
• meeting at least one signalling means (MSi; i=1...n);
• receiving an encoded signal (Si) from the signalling means (MSi; i=1 ...n);
• following a path change (ΔPi; i=1..n) relative to a predefined path (PPRED) on the basis of the received signal (Si; i=1..n), wherein the at least one signalling means (MSi; i=1...n) defines for the lawn mower (1), via the path change (ΔPi), at least one portion of an optimal path (POPT) for reaching a target point (O) relative to the predefined path (PPRED) provided for by the predefined operation of the lawn mower (1), wherein said signalling means (MSi; i=1...n) is configured to be movable within a cutting area (A) in order to define a new optimal path (POPT) as a function of a modification of said target point (O).

## Patentansprüche

1. System (100) zum Schneiden von Gras, umfassend:
einen Rasenmäher (1), versehen mit:
- Bewegungsmitteln (20) zum Bewegen des Rasenmähers (1) in einem Schneidbereich (A);
- einem oder mehreren Messern (30) zum Schneiden von Gras in diesem Schneidbereich (A);
ein umlaufendes Kabel (2), das den Schneidbereich (A) abgrenzt, in dem ein umlaufendes elektrisches Signal (ES) verbreitet wird;
mindestens ein Mittel (MSi; i= 1...n) zum Signalisieren einer Wegänderung (ΔPi; i= 1...n), verbunden mit dem umlaufenden Kabel (2),
- wobei das Mittel (MSi; i=1 ...n) zum Signalisieren einer Wegänderung (ΔPi; i= 1...n) ausgelegt ist, um dem Rasenmäher (1) eine Wegänderung (ΔPi) relativ zu einem vorgegebenen Weg (PPRED) zu melden, der vom vorgegebenen Betrieb des Rasenmähers (1) bereitgestellt wird,
- wobei die Wegänderung (ΔPi) dem Rasenmäher mittels eines verschlüsselten Signals (Si; i=1...n) gemeldet wird, das vom Signalisierungsmittel (MSi; i= 1...n) generiert wird,
- wobei das Signalisierungsmittel (MSi; i= 1...n) durch eine elektromotorische Kraft (fem) angetrieben wird, die durch ein Magnetfeld (B) induziert wird, das auf Basis des umlaufenden elektrischen Signals (ES) generiert wird,
wobei der Rasenmäher (1) zudem umfasst:
- Sensormittel (40), die ausgelegt sind, um das verschlüsselte Signal (Si) abzutasten;
- eine Verarbeitungseinheit (60), die mit den Sensormitteln (40) verbunden und ausgelegt ist, um die Bewegungsmittel (20) als eine Funktion des abgetasteten verschlüsselten Signals (Si) zu betätigen, sodass die Bewegungsmittel (20) bewegt werden, um den Rasenmäher (1) zu veranlassen, die Wegänderung (ΔPi) durchzuführen,
wobei das mindestens eine Signalisierungsmittel (MSi; i1...n) für den Rasenmäher (1) über die genannte Wegänderung (ΔPi) mindestens einen Abschnitt eines optimalen Wegs (POPT) definiert, um einen Zielpunkt (0) relativ zum vorgegebenen Weg (PPRED), der vom vorgegebenen Betrieb des Rasenmähers (1) bereitgestellt ist, zu erreichen,
**dadurch gekennzeichnet, dass**
dieses Mittel (MSi; i=1...n) zum Signalisieren einer Wegänderung (ΔPi; i=1...n) ausgelegt ist, um innerhalb des Schneidbereichs (A) bewegbar zu sein und einen neuen optimalen Weg (POPT) als eine Funktion einer Änderung des Zielpunkts (0) zu definieren.

2. System nach Anspruch 1, wobei das Mittel (MSi; i=1...n) zum Signalisieren einer Wegänderung (ΔPi; i=1...n) einen elektronischen Kreislauf (10) umfasst, der ausgelegt ist, um das verschlüsselte Signal (Si; i=1...n) auszusenden.

3. System nach einem der vorhergehenden Ansprüche, wobei das elektronische verschlüsselte Signal (Si) einen Betriebscode (Ci; 1...n) umfasst, der repräsentativ für eine spezielle Wegänderungsfunktion (fΔPi; i= 1...n) ist, die repräsentativ für eine Änderung des vorgegebenen Wegs des Rasenmähers (1) ist.

4. System nach Anspruch 3, wobei die Verarbeitungseinheit (60) ein Speichermodul (63) umfasst, umfassend eine Übereinstimmung zwischen einem vorgegebenen Betriebscode (CPREDi; i=1...n) und der Wegänderungsfunktion (fΔPi; i= 1...n).

5. System nach Anspruch 3 und 4, wobei die Verarbeitungseinheit (60) ein Vergleichsmodul (62) umfasst, das ausgelegt ist, um den Betriebscode (Ci; 1...n) mit dem vorgegebenen Betriebscode (CPREDi; i=1...n) zu vergleichen und eine entsprechende Wegänderungsfunktion (fΔPi; i= 1...n) zu definieren, sodass die Bewegungsmittel (20) bewegt werden, um den Rasenmäher (1) dazu zu veranlassen, die Wegänderung (ΔPi) durchzuführen.

6. System nach einem der Ansprüche 3 bis 5, wobei die Wegänderungsfunktionen (fΔPi; i= 1...n) einen oder mehrere der folgenden Vorgänge umfassen:
Durchführen eines entsprechenden Einfahrtsmanövers, wenn eine Ladestation (fΔPO) vorhanden ist;
Wenden nach links oder rechts um einen vorgegebenen Winkel, um die schnellste Rückfahrtsstrecke zu erreichen, wenn ein gefährliches Hindernis (OST1, OST2) vorhanden ist (fΔP1); Beginnen des Schneidens in einem Nebenbereich (ASi; 1= 1..m) (fΔP2);
nacheinander Drosseln der Geschwindigkeit, Wenden nach links oder rechts um einen vorgegebenen Winkel und Beschleunigen (fΔP3);
nacheinander Anheben der Messer, Drosseln der Geschwindigkeit, Senken der Messer und Beschleunigen (fΔP4);
oder Derartiges.

7. System nach einem der vorhergehenden Ansprüche, wobei das Signalmittel (MSi; i= 1...n) ein Messgerät zum Messen der Stärke (B1) des Magnetfelds (B) umfasst, das das Signalmittel speist.

8. System nach Anspruch 7, wobei der elektronische Kreislauf (10) einen Generator (G1) des verschlüsselten Signals (Si) umfasst, der ausgelegt ist, um den Betriebscode (Ci; i=1...n) als eine Funktion der gemessenen Stärke (B1) zu generieren.

9. System nach Anspruch 8, wobei der Generator (G1) ausgelegt ist, um den Betriebscode (Ci; i=1...n) als eine Funktion vorgegebener Mindestschwellenwerte (B11, B12) der gemessenen Stärke (B1) zu generieren.

10. System nach Anspruch 9, wobei der Generator (G1) ausgelegt ist, um zu generieren:
einen Betriebscode (Ci), der einer detaillierten Wegänderungsfunktion (fΔPi; i= 1...n) entspricht, wenn der Wert des Magnetfelds (B) B>=B12 beträgt;
einen Betriebscode (Ci), der einer einfachen Wegänderungsfunktion (fΔPi; i= 1...n) entspricht, wenn der Wert des Magnetfelds (B) B11<B<B12 beträgt.

11. System nach einem der vorhergehenden Ansprüche, **dadurch gekennzeichnet, dass** mindestens ein Signalisierungsmittel (MSi; i= 1...n) aus ferromagnetischem Material besteht.

12. System nach Anspruch 11, wobei das mindestens eine Signalisierungsmittel (MSi; i= 1...n) umfasst:
einen Kondensator (COND), der ausgelegt ist, um durch die elektromotorische Kraft (fem) geladen zu werden,
den elektronischen Kreislauf (10), gespeist durch eine entsprechende Energie (U), die vom Kondensator (COND) gespeichert wird, und ausgelegt, um die verschlüsselten Signale (Si) zu generieren.

13. System nach einem der vorhergehenden Ansprüche, wobei das mindestens eine Mittel (MSi; i= 1...n) zum Signalisieren einer Wegänderung (ΔPi; i= 1...n) umfasst:
einen Schaft (11);
das mindestens eine Signalisierungsmittel, das vom umlaufenden Kabel (2) gelöst ist.

14. System nach einem der Ansprüche 1 bis 12, wobei das mindestens eine Mittel (MSi; i= 1...n) zum Signalisieren einer Wegänderung (ΔPi; i= 1...n) mit dem umlaufenden Kabel (2) in Kontakt ist.

15. System nach Anspruch 14, wobei das mindestens eine Mittel (MSi; i=1 ...n) zum Signalisieren einer Wegänderung (ΔPi; i=1 ...n) umfasst: einen Schaft (11); einen hakenförmigen Kopf (12), vorzugsweise an einem Ende des Schafts (11), ausgelegt, um das umlaufende Kabel (2) zu umgeben, sodass ein materieller Kontakt zwischen dem Signalisierungsmittel (MSi; i= 1...n) und dem umlaufenden Kabel (2) definiert wird.

16. System nach einem der vorhergehenden Ansprüche, wobei der Schneidbereich (A) mindestens einen Hauptbereich (AP) und mindestens einen Nebenbereich (ASi; i=1..m) umfasst, die möglichst aneinandergrenzen und durch mindestens das umlaufende Kabel (2) abgegrenzt sind.

17. Schneidverbesserungsverfahren, implementiert durch das System für ein verbessertes Schneiden nach den vorhergehenden Ansprüchen, umfassend die folgenden Schritte, die durch den Rasenmäher (1) in einem Schneidbereich (A) implementiert werden:
Bewegen entlang des umlaufenden Kabels (2), das den Schneidbereich (A) abgrenzt, um den Zielpunkt (0) zu erreichen;
Treffen auf das mindestens eine Signalisierungsmittel (MSi; i=1...n);
Empfangen eines verschlüsselten Signals (Si) vom Signalisierungsmittel (MSi; i=1...n);
Folgen einer Wegänderung (ΔPi; i=1..n) relativ zu einem vorgegebenen Weg (PPRED) auf Basis des empfangenen Signals (Si; i=1..n), wobei das mindestens eine Signalisierungsmittel (MSi; i=1...n) für den Rasenmäher (1)
über die Wegänderung (ΔPi) mindestens einen Abschnitt eines optimalen Wegs (POPT) definiert, um einen Zielpunkt (0) relativ zum vorgegebenen Weg (PPRED) zu erreichen, der durch den vorgegebenen Betrieb des Rasenmähers (1) bereitgestellt ist, wobei das Signalisierungsmittel (MSi; i=1...n) ausgelegt ist, um innerhalb eines Schneidbereichs (A) bewegt zu werden und einen neuen optimalen Weg (POPT) als eine Funktion einer Änderung des Zielpunkts (0) zu definieren.

## Revendications

1. Système (100) pour couper l'herbe comprenant : une tondeuse à gazon (1) pourvue :
- de moyens de déplacement (20) servant à déplacer ladite tondeuse à gazon (1) dans une zone de coupe (A) ;
- d'une ou plusieurs lames (30) servant à couper l'herbe dans ladite zone de coupe (A) ;
d'un câble périphérique (2), délimitant ladite zone de coupe (A), dans lequel un signal électrique périphérique (ES) est propagé ;
d'au moins un moyen (MSi ; i= 1...n) servant à signaler un changement de trajectoire (ΔPi ; i=1...n) associé au dit câble périphérique (2),
- dans lequel ledit moyen (MSi ; i=1...n) servant à signaler un changement de trajectoire (ΔPi ; i= 1...n) est configuré pour signaler à ladite tondeuse à gazon (1) un changement de trajectoire (ΔPi) par rapport à une trajectoire prédéfinie (PPRED) prévue par le fonctionnement prédéfini de ladite tondeuse à gazon (1) ;
- dans lequel ledit changement de trajectoire (ΔPi) est signalé à ladite tondeuse à gazon au moyen d'un signal codé (Si ; i=1...n) généré par ledit moyen de signalisation (MSi ; i= 1...n) ;
- dans lequel ledit moyen de signalisation (MSi ; i= 1...n) est alimenté par une force électromotrice (fem) induite par un champ magnétique (B) générée en fonction dudit signal électrique périphérique (ES) ;
dans lequel ladite tondeuse à gazon (1) comprend de plus :
- un moyen de détection (40) configuré pour détecter ledit signal codé (Si) ;
- une unité de traitement (60) associée au dit moyen de détection (40) et configurée pour actionner lesdits moyens de déplacement (20) en fonction dudit signal codé détecté (Si) de sorte que lesdits moyens de déplacement (20) sont déplacés afin de permettre à la tondeuse à gazon (1) d'effectuer ledit changement de trajectoire (ΔPi) ; dans lequel ledit au moins un moyen de signalisation (MSi ; i1...n) définit pour ladite tondeuse à gazon (1), via ledit changement de trajectoire (ΔPi), au moins une partie d'une trajectoire optimale (POPT) pour atteindre un point visé (0) par rapport à ladite trajectoire prédéfinie (PPRED) prévue par le fonctionnement prédéfini de ladite tondeuse à gazon (1) ;
**caractérisé en ce que**
ledit moyen (MSi; i=1...n) servant à signaler un changement de trajectoire (ΔPi ; i=1...n) est configuré pour être mobile à l'intérieur de ladite zone de coupe (A) afin de définir une nouvelle trajectoire optimale (POPT) en fonction d'une modification dudit point visé (O).

2. Système selon la revendication 1, dans lequel ledit moyen (MSi ; i=1...n) servant à signaler un changement de trajectoire (ΔPi ; i=1...n) comprend un circuit électronique (10) configuré pour émettre ledit signal codé (Si ; i=1...n).

3. Système selon l'une quelconque des revendications précédentes, dans lequel ledit signal codé électrique (Si) comprend un code opérationnel (Ci ; 1...n) représentatif d'une fonction de changement de trajectoire spécifique (fΔPi ; i= 1...n) représentative d'un changement dans la trajectoire prédéfinie de ladite tondeuse à gazon (1).

4. Système selon la revendication 3, dans lequel ladite unité de traitement (60) comprend un module de mémoire (63) comprenant une correspondance entre un code opérationnel prédéfini (CPREDi ; i=1...n) et ladite fonction de modification de trajectoire (fΔPi ; i= 1...n).

5. Système selon les revendications 3 et 4, dans lequel ladite unité de traitement (60) comprend un module de comparaison (62) configuré pour comparer ledit code opérationnel (Ci ; 1...n) avec ledit code opérationnel prédéfini (CPREDi ; i=1...n) pour identifier ladite fonction de changement de trajectoire (fΔPi ; i= 1...n) correspondante de sorte que lesdits moyens de déplacement (20) soient déplacés afin de permettre à la tondeuse à gazon (1) d'effectuer ledit changement de trajectoire (ΔPi) .

6. Système selon l'une quelconque des revendications de 3 à 5, dans lequel lesdites fonctions de changement de trajectoire (fAPi ; i= 1...n) comprennent une ou plusieurs opérations parmi :
effectuer une manoeuvre d'entrée dédiée si une base de recharge (fΔP0) est présente ;
tourner à gauche ou à droite selon un angle prédéfini afin d'atteindre la ligne de retour la plus rapide, si un obstacle dangereux (OST1, OST2) est présent (fΔP1) ;
commencer à couper dans une zone secondaire (ASi ; 1= 1..m) (fΔP2) ;
en séquence, ralentir, tourner à gauche ou à droite selon un angle prédéfini et accélérer (fΔP3) ;
en séquence, relever les lames, ralentir, abaisser les lames et accélérer (fΔP4) ;
ou similaire.

7. Système selon l'une quelconque des revendications précédentes, dans lequel ledit moyen de signalisation (MSi ; i= 1...n) comprend un appareil de mesure servant à mesurer l'intensité (B1) dudit champ magnétique (B) qui alimente ledit moyen de signalisation.

8. Système selon la revendication 7, dans lequel ledit circuit électronique (10) comprend un générateur (G1) dudit signal codé (Si) configuré pour générer ledit code opérationnel (Ci ; i=1...n) en fonction de ladite intensité mesurée (B1).

9. Système selon la revendication 8, dans lequel ledit générateur (G1) est configuré pour générer ledit code opérationnel (Ci ; i=1...n) en fonction de valeurs de seuil minimum prédéfinies (B11, B12) de ladite intensité mesurée (B1).

10. Système selon la revendication 9, dans lequel ledit générateur (G1) est configuré pour générer :
un code opérationnel (Ci) correspondant à une fonction de changement de trajectoire détaillée (fΔPi ; i= 1...n) si la valeur dudit champ magnétique (B) est B >= B12 ;
un code opérationnel (Ci) correspondant à une fonction de changement de trajectoire simple (fΔPi ; i= 1...n) si la valeur dudit champ magnétique (B) est B11 < B < B12 ;

11. Système selon l'une quelconque des revendications précédentes, dans lequel ledit au moins un moyen de signalisation (MSi ; i= 1...n) est réalisé dans un matériau ferromagnétique.

12. Système selon la revendication 11, dans lequel ledit au moins un moyen de signalisation (MSi ; i= 1...n) comprend :
un condensateur (COND) configuré pour être chargé grâce à la force électromotrice (fem) ;
ledit circuit électrique (10), alimenté par une énergie (U) correspondante stockée par ledit condensateur (COND), et configuré pour générer lesdits signaux codés (Si).

13. Système selon l'une quelconque des revendications précédentes, dans lequel ledit au moins un moyen (MSi ; i= 1...n) servant à signaler un changement de trajectoire (ΔPi; i=1...n) comprend :
une tige (11) ;
ledit au moins un moyen de signalisation étant détaché dudit câble périphérique (2).

14. Système selon l'une quelconque des revendications de 1 à 12, dans lequel ledit au moins un moyen (MSi ; i= 1...n) servant à signaler un changement de trajectoire (ΔPi; i= 1...n) est en contact avec ledit câble périphérique (2).

15. Système selon la revendication 14, dans lequel ledit au moins un moyen (MSi ; i= 1...n) servant à signaler un changement de trajectoire (ΔPi; i= 1...n) comprend : une tige (11) ;
une tête en forme de crochet (12), de préférence à une extrémité de ladite tige (11), configurée pour entourer ledit câble périphérique (2) de manière à définir un contact physique dudit moyen de signalisation (MSi ; i= 1...n) avec ledit câble périphérique (2).

16. Système selon l'une quelconque des revendications précédentes, dans lequel ladite zone de coupe (A) comprend au moins une zone principale (AP) et au moins une zone secondaire (ASi ; i=1..m), si possible contiguës, et délimitées au moins par ledit câble périphérique (2).

17. Procédé pour une coupe améliorée mise en oeuvre par le système de coupe améliorée selon les revendications précédentes, comprenant les étapes, mises en oeuvre par ladite tondeuse à gazon (1) dans une zone de coupe (A), de :
se déplacer le long du câble périphérique (2) délimitant ladite zone de coupe (A) pour atteindre le point visé (0) ;
rencontrer au moins un moyen de signalisation (MSi ; i=1...n) ;
recevoir un signal codé (Si) provenant du moyen de signalisation (MSi ; i=1...n) ;
suivre un changement de trajectoire (ΔPi ; i=1..n) par rapport à une trajectoire prédéfinie (PPRED) sur la base du signal reçu (Si ; i=1..n), dans lequel au moins un moyen de signalement (MSi ; i=1...n) définit pour la tondeuse à gazon (1),
via le changement de trajectoire (ΔPi), au moins une partie d'une trajectoire optimale (POPT) pour atteindre un point visé (0) par rapport à la trajectoire prédéfinie (PPRED) prévue par le fonctionnement prédéfini de la tondeuse à gazon (1), dans lequel ledit moyen de signalisation (MSi ; i=1...n) est configuré pour être mobile à l'intérieur d'une zone de coupe (A) afin de définir une nouvelle trajectoire optimale (POPT) en fonction d'une modification dudit point visé (0).
